# EUROPÄISCHE PATENTANMELDUNG

(11) **EP 4 169 693 A1**
(43) Veröffentlichungstag der Anmeldung: **26.04.2023**
(21) Anmeldenummer: 22200514.2
(22) Anmeldetag: 10.10.2022
(51) Int. Cl.: B29C 48/07, B29C 48/88, F25D 3/11, B29C 48/92, B29D 30/00, B29C 48/06, B29L 30/00

(54) **VERFAHREN ZUM ABKÜHLEN EINES WÄHREND DER REIFENPRODUKTION HERGESTELLTEN EXTRUDATES**

(30) Priorität: 19.10.2021 DE 102021211784
(71) Anmelder: Continental Reifen Deutschland GmbH, 30165 Hannover (DE)
(72) Erfinder: Cai, Xiaoke, 30165 Hannover (DE)
(74) Vertreter: Continental Corporation

(57) **Zusammenfassung**

Die Erfindung betrifft ein Verfahren zum Abkühlen eines während der Reifenproduktion hergestellten Extrudates (E), mit den Schritten: Fördern des Extrudates (E) mittels einer Fördereinrichtung (12) einer Kühlvorrichtung (10) durch einen Kühltunnel (16) der Kühlvorrichtung (10) entlang einer tunnelinternen Kühlstrecke (18) und Kühlen des Kühltunnels (16) mittels eines über ein Fluidsystem (20) der Kühlvorrichtung (10) bereitgestellten Kühlfluids (F).

## Beschreibung

Die Erfindung betrifft ein Verfahren zum Abkühlen eines während der Reifenproduktion hergestellten Extrudates und eine Anlage zum Herstellen eines extrudierten Materialstreifens für die Produktion eines Reifens, mit einem Extruder, welcher dazu eingerichtet ist, ein Extrudat für die Reifenproduktion herzustellen.

Das Abkühlen von Extrudaten erfolgt in der Reifenproduktion üblicherweise mittels Wasserkühlung, Trommelkühlung oder mittels eines Förderbandes mit gekühlten Metalloberflächen. Bei der Wasserkühlung wird das Extrudat beispielsweise in ein Wasserbad getaucht oder durch ein Wasserbad gefördert. Bei der Trommelkühlung wird das Extrudat in Kontakt mit einer kühlenden Trommeloberfläche gebracht, sodass eine Kontaktkühlung umgesetzt wird. Eine derartige Kontaktkühlung erfolgt auch bei der Verwendung eines Förderbandes mit gekühlten Metalloberflächen.

Die in der Reifenproduktion bisher eingesetzten Kühlkonzepte zum Abkühlen von Extrudaten weisen eine vergleichsweise geringe Kühleffizienz auf und erfordern vergleichsweise lange Kühlzeiten. Untersuchungen haben gezeigt, dass die in der Reifenproduktion hergestellten Extrudate mit zunehmender Abkühlzeit zu einer erhöhten Materialporosität neigen. Ein hoher Grad an Porosität kann zu einer erheblichen Beeinträchtigung der Reifenqualität führen und soll aus diesem Grunde möglichst vermieden werden. Die Materialporosität sinkt jedoch mit zunehmender Kühlrate, sodass eine Schockfrostung des Extrudates unmittelbar nach der Ausleitung aus dem Extruder zur Minimierung der Materialporosität führt.

Die bisher zur Umsetzung einer Wasserkühlung und/oder Trommelkühlung eingesetzten Vorrichtungen können außerdem nur mit einem vergleichsweise hohen Aufwand angepasst werden. Zum Verändern von Prozessparametern und/oder zur Kühlung unterschiedlicher Extrudatgeometrien sind im Regelfall aufwendige Modifikationen an den Vorrichtungen vorzunehmen. Insofern ist die Einsetzbarkeit entsprechender Vorrichtungen stark eingeschränkt.

Insbesondere bei der in der Reifenproduktion verbreiteten Wasserkühlung kann die abnehmende Wasserqualität zur Verunreinigung oder zur Kontamination des Extrudates führen. Darüber hinaus ist vor der Weiterverarbeitung oder Lagerung des Extrudates eine Trocknung erforderlich.

Die der Erfindung zugrundeliegende Aufgabe besteht somit darin, die bei der Abkühlung von während der Reifenproduktion hergestellten Extrudaten auftretende Porositätssteigerung zu verringern oder zu eliminieren und die Anpassbarkeit des Kühlvorgangs zu vereinfachen.

Die Aufgabe wird gelöst durch ein Verfahren der eingangs genannten Art, wobei das Extrudat im Rahmen des erfindungsgemäßen Verfahrens mittels einer Fördereinrichtung einer Kühlvorrichtung durch einen Kühltunnel der Kühlvorrichtung entlang einer tunnelinternen Kühlstrecke gefördert wird und ein Kühlen des Kühltunnels mittels eines über ein Fluidsystem der Kühlvorrichtung bereitgestellten Kühlfluids erfolgt.

Das erfindungsgemäße Verfahren weist eine vergleichsweise hohe Kühleffizienz auf und ist flexibel einsetzbar. Durch die höhere Kühleffizienz können kürzere Kühlzeiten umgesetzt werden, wodurch die Porositätssteigerung während des Abkühlvorgangs verringert oder eliminiert wird. Ferner weist die in dem Verfahren verwendete Kühlvorrichtung einen vergleichsweise geringen Platzbedarf auf und kann ohne großen Aufwand in eine Anlage zum Herstellen eines extrudierten Materialstreifens für die Produktion eines Reifens integriert werden. Über den gekühlten Kühltunnel der Kühlvorrichtung kann eine Schockfrostung des Extrudates erfolgen, sodass die Bildung von Porositäten während des Kühlvorgangs auf ein Minimalmaß reduziert wird. Bei dem erfindungsgemäßen Verfahren erfolgt keine Kontamination von Kühlflüssigkeit oder einer zur Kühlung eingesetzten Kontaktfläche, etwa einer Kühltrommel.

Die Kühlvorrichtung ist vorzugsweise im Nahbereich des Extruders positioniert, sodass eine direkte Übergabe des Extrudates von dem Extruder in die Kühlvorrichtung erfolgen kann. Die Übergabezeit des Extrudates von dem Extruder zur Kühlvorrichtung ist vorzugsweise kürzer als 120 Sekunden, vorzugsweise kürzer als 60 Sekunden, besonders bevorzugt kürzer als 30 Sekunden oder kürzer als 15 Sekunden. Umso schneller das Extrudat von dem Extruder in die Kühlvorrichtung gelangt, desto geringer ist die Porositätsentwicklung. Vorzugsweise wird das Extrudat unmittelbar nach dem Verlassen des Extruders mittels der Kühlvorrichtung schockgefrostet. Das Extrudat kann beispielsweise ein Materialstreifen sein. Der Materialstreifen kann beispielsweise zur Herstellung eines Laufstreifens eines Reifens dienen.

In einer bevorzugten Ausführungsform des erfindungsgemäßen Verfahrens wird das Kühlfluid zum Kühlen des Kühltunnels in den Kühltunnel eingeleitet. Das Einleiten des Kühlfluids in den Kühltunnel erfolgt vorzugsweise über eine oder mehrere Ausströmöffnungen, durch welche das Kühlfluid in den Kühltunnel gelangen kann. Die eine oder die mehreren Ausströmöffnungen können als Einleitdüsen ausgebildet sein. Die eine oder die mehreren Ausströmöffnungen können derart positioniert und ausgerichtet sein, dass das Kühlfluid in Richtung der tunnelinternen Kühlstrecke abgegeben wird. Das Extrudat kann innerhalb des Kühltunnels direkt von dem Kühlfluid angeströmt werden. Die Anströmung kann von einer Richtung oder aus mehreren Richtungen erfolgen. Das Fluidsystem kann eine oder mehrere Fluidleitungen umfassen, über welche das Kühlfluid zu der einen oder den mehreren Ausströmöffnungen geleitet wird. Innerhalb des Kühltunnels der Kühlvorrichtung kann ein oder können mehrere tunnelinterne Strömungserzeuger vorhanden sein, über welche das Gas oder Gasgemisch innerhalb des Kühltunnels verteilt und/oder vermischt wird.

In einer anderen bevorzugten Ausführungsform des erfindungsgemäßen Verfahrens wird das Kühlfluid aufgrund der Druckdifferenz zwischen dem Fluidsystem und dem Kühltunnel beim Einleiten in den Kühltunnel von einem flüssigen in einen gasförmigen Zustand überführt. In der Fluidleitung oder den Fluidleitungen des Fluidsystem herrscht ein vergleichsweise hoher Druck, beispielsweise zumindest 10bar, zumindest 25bar, zumindest 50bar oder zumindest 100bar. Im Kühltunnel herrscht beispielsweise Umgebungsdruck. Durch die Druckänderung beim Einleiten des Kühlfluids in den Kühltunnel tritt vorzugsweise ein Phasenübergang von der Flüssigphase in die Gasphase ein.

Das Kühlfluid kann beispielsweise ein kryogenes Kühlmedium sein. Das Kühlfluid kann beispielsweise Stickstoff sein oder Stickstoff umfassen. Beispielsweise kann das Kühlfluid auch Kohlenstoffdioxid sein oder Kohlenstoffdioxid umfassen. Alternativ kann das Kühlfluid auch gasförmig in dem Fluidsystem gefördert werden. In diesem Fall ist das Kühlfluid beispielsweise vorgekühlte Luft, sodass beim Einleiten des Kühlfluids in den Kühltunnel eine Luftkühlung umgesetzt wird.

In einer weiteren bevorzugten Ausführungsform des erfindungsgemäßen Verfahrens wird das Extrudat über eine Einlauföffnung in den Kühltunnel hineingefördert, wobei die Einlauföffnung vorzugsweise mittels eines Schließkörpers verschließbar ist und die Einlauföffnung beim Hineinfördern des Extrudates geöffnet ist. Alternativ oder zusätzlich wird das Extrudat über eine Auslauföffnung aus dem Kühltunnel herausgefördert, wobei die Auslauföffnung vorzugsweise mittels eines Schließkörpers verschließbar ist und die Auslauföffnung beim Herausfördern des Extrudates geöffnet ist. Das Extrudat wird vor dem Einleiten in den Kühltunnel nicht abgelängt, insbesondere nicht geschnitten, sondern wird als Extrudatstreifen in einem kontinuierlichen Prozess in den Kühltunnel eingeleitet und kontinuierlich durch den Kühltunnel gefördert. Die Größe und/oder Form der Einlauföffnung und/oder der Auslauföffnung sind somit vorzugsweise an die Form des Extrudatstreifens angepasst oder an die Form des Extrudatstreifens anpassbar. Vorzugsweise ist die Einlauföffnung und/oder die Auslauföffnung nur geringfügig größer als der Querschnitt des Extrudatstreifens, sodass der Wärmeaustausch zwischen dem Inneren des Kühltunnels und der Umgebung möglichst gering ist. Die Einlauföffnung und/oder die Auslauföffnung können beispielsweise während Unterbrechungen und/oder Pausen mittels der Schließkörper verschlossen werden, um einen Wärmeaustausch zwischen dem Inneren des Kühltunnels und der Umgebung zu verhindern oder zumindest zu reduzieren. Die Fördereinrichtung ist vorzugsweise als Bandfördereinrichtung ausgebildet, deren Förderband sich vorzugsweise entlang der Kühlstrecke erstreckt. Der Schließkörper an der Einlauföffnung kann eine Einlaufklappe sein. Vor der Einlauföffnung kann ein Detektor angeordnet sein, welcher die Präsenz eines Extrudates innerhalb eines Detektionsbereichs detektiert. Wenn ein Extrudat in dem Detektionsbereich erfasst wird, kann eine Steuerungseinrichtung ein selbsttätiges Öffnen des Schließkörpers zum Hineinfördern des Extrudates in den Kühltunnel veranlassen. Ein entsprechender Extrudatdetektor kann auch im Nahbereich der Auslauföffnung angeordnet sein, sodass eine entsprechende Steuerung des Schließkörpers an der Auslauföffnung umgesetzt werden kann.

Das Verfahren kann ferner das Abführen, insbesondere Absaugen, des Gases bzw. Gasgemisches aus dem Kühltunnel mittels einer Abführeinrichtung, insbesondere mittels einer Absaugeinrichtung, der Kühlvorrichtung umfassen. Die Abführeinrichtung kann beispielsweise einen Strömungserzeuger umfassen, wobei der Strömungserzeuger als Ventilator ausgebildet sein kann.

Es ist ferner ein erfindungsgemäßes Verfahren bevorzugt, bei welchem die Steuerungseinrichtung der Kühlvorrichtung einen, mehrere oder sämtliche der folgenden Prozessparameter steuert:
- die Temperatur innerhalb des Kühltunnels;
- den Fluiddruck innerhalb des Fluidsystems;
- die Einleitmenge und/oder die Einleitrate des in den Kühltunnel eingeleiteten Kühlfluids;
- die Verweildauer des Extrudates innerhalb des Kühltunnels;
- die Fördergeschwindigkeit des Extrudates entlang der tunnelinternen Kühlstrecke;
- die Zusammensetzung des Kühlfluids.

Durch die Steuerung der Temperatur innerhalb des Kühltunnels kann die Kühldauer und die Kühlintensität eingestellt werden. Auch über den Fluiddruck innerhalb des Fluidsystems sowie die Einleitmenge und/oder die Einleitrate des in den Kühltunnel eingeleiteten Kühlmediums kann die Kühlwirkung während des Förderns des Extrudates entlang der Kühlstrecke angepasst werden. Die Verweildauer des Extrudates innerhalb des Kühltunnels kann durch eine Änderung der Fördergeschwindigkeit der Fördereinrichtung umgesetzt werden. Die Kühlstrecke durch den Kühltunnel kann auch länger sein als die Kühltunnellänge. Beispielsweise wird das Extrudat in dem Kühltunnel tunnelintern umgelenkt, sodass die Verweildauer des Extrudates in dem Kühltunnel erhöht wird. Die Länge der Kühlstrecke kann auch einstellbar sein, sodass die Kühlstrecke an unterschiedliche Extrudateigenschaften und/oder Kühlerfordernisse anpassbar ist. Beispielsweise ist das Kühlfluid ein Stoffgemisch mit zumindest einem kryogenen Stoff. Beispielsweise kann die Steuerungseinrichtung die Konzentration des kryogenen Stoffes in dem Kühlfluid steuern. Neben den Steuerungsaspekten hat das Layout des Kühltunnels einen erheblichen Einfluss auf die Kühleigenschaften und somit auf den Kühlprozess. Insofern kann beispielsweise eine spezifische Kühltunnellänge zur Erzielung einer notwendigen und/oder beabsichtigen Kühlleistung erforderlich sein.

Es ist ferner ein erfindungsgemäßes Verfahren vorteilhaft, bei welchem das Extrudat nach der Abkühlung durch die Kühlvorrichtung in ein Flüssigkeitsbad gegeben wird. Beispielsweise wird das Extrudat in das Flüssigkeitsbad eingetaucht oder durch das Flüssigkeitsbad hindurchgefördert. Innerhalb des Flüssigkeitsbads erfolgt vorzugsweise eine weitere Abkühlung und/oder Reinigung des Extrudates. Die Kühlvorrichtung und das Flüssigkeitsbad sind vorzugsweise Extrusions-Folgeeinrichtungen einer Anlage zum Herstellen eines extrudierten Materialstreifens für die Produktion eines Reifens. Die Flüssigkeit des Flüssigkeitsbads kann beispielsweise Wasser sein. Demnach ist das Flüssigkeitsbad ein Wasserbad und dient zur Wasserkühlung. Alternativ oder zusätzlich kann das Extrudat nach der Abkühlung durch die Kühlvorrichtung auf eine Kühltrommel gefördert werden, auf welcher das Extrudat zur weiteren Abkühlung mit Kühlflächen der Kühltrommel in Kontakt gebracht wird.

In einer besonders bevorzugten Ausführungsform des erfindungsgemäßen Verfahrens wird nach der Abkühlung des Extrudates durch die Kühlvorrichtung zumindest eine Materialeigenschaft des Extrudates mittels einer sensorischen Prüfvorrichtung erfasst. Vorzugsweise passt die Steuerungseinrichtung der Kühlvorrichtung den Betrieb der Kühlvorrichtung in Abhängigkeit der von der sensorischen Prüfvorrichtung erfassten Materialeigenschaft des Extrudates an. Die sensorische Prüfvorrichtung erlaubt vorzugsweise das sensorische Erfassen der Materialporosität. Die zumindest eine Materialeigenschaft des Extrudates kann also beispielsweise die Materialporosität sein. Die Prüfvorrichtung arbeitetet vorzugsweise berührungslos und/oder strahlungsbasiert. Die Prüfvorrichtung untersucht das Extrudate vorzugsweise mittels Röntgenstrahlung. Somit kann die Steuerungseinrichtung beispielsweise einen oder mehrere Prozessparameter in Abhängigkeit der erfassten Materialporosität ändern. Vorzugsweise untersucht die Steuerungseinrichtung den Einfluss der vorgenommenen Prozessparameteranpassung auf die erfasste Materialeigenschaft. Auf diese Weise kann ein Regelkreis umgesetzt werden, welcher die Prozessparameter kontinuierlich anpasst, um einen möglichst geringen Porositätsgrad zu erzielen.

Die der Erfindung zugrundeliegende Aufgabe wird ferner durch eine Anlage der eingangs genannten Art gelöst, wobei die erfindungsgemäße Anlage eine Kühlvorrichtung zum Abkühlen des mittels des Extruders hergestellten Extrudates umfasst. Die Kühlvorrichtung weist einen Kühltunnel mit einer tunnelinternen Kühlstrecke, eine Fördereinrichtung zum Fördern des Extrudates entlang der Kühlstrecke durch den Kühltunnel und ein Fluidsystem, welches dazu eingerichtet ist, ein in den Kühltunnel einzuleitendes Kühlfluid zu führen, auf.

In einer besonders bevorzugten Ausführungsform der erfindungsgemäßen Anlage ist die Kühlvorrichtung dazu eingerichtet, das Extrudat gemäß einem Verfahren nach einer der vorstehend beschriebenen Ausführungsformen abzukühlen. Hinsichtlich der Vorteile und Modifikationen einer solchen Anlage wird auf die Vorteile und Modifikationen des erfindungsgemäßen Verfahrens verwiesen.

In einer anderen bevorzugten Ausführungsform weist die erfindungsgemäße Anlage ein Flüssigkeitsbad auf, in welches das Extrudat nach der Abkühlung durch die Kühlvorrichtung förderbar ist. Das Flüssigkeitsbad der Anlage kann ein Wasserbad sein. Ferner kann die erfindungsgemäße Anlage eine Steuerungseinrichtung aufweisen, welche dazu eingerichtet ist, einen oder mehrere Prozessparameter der Kühlvorrichtung zu steuern. Die von der Steuerungseinrichtung steuerbaren Prozessparameter können sein: die Temperatur innerhalb des Kühltunnels, der Fluiddruck innerhalb des Fluidsystems, die Einleitmenge und/oder Einleitrate des in den Kühltunnel eingeleiteten Kühlmediums, die Verweildauer des Extrudates innerhalb des Kühltunnels, die Fördergeschwindigkeit des Extrudates entlang der tunnelinternen Kühlstrecke und/oder die Zusammensetzung des Kühlfluids. Die erfindungsgemäße Anlage kann ferner eine sensorische Prüfvorrichtung umfassen, welche dazu eingerichtet ist, zumindest eine Materialeigenschaft des Extrudates nach der Abkühlung des Extrudates durch die Kühlvorrichtung zu erfassen. Die Prüfvorrichtung kann einen oder mehrere berührungslos und/oder strahlungsbasiert arbeitende Sensoren umfassen. Vorzugsweise ist die Prüfvorrichtung dazu eingerichtet, Röntgenaufnahmen von dem Extrudat zu erzeugen und auszuwerten. Die Steuerungseinrichtung der Kühlvorrichtung ist vorzugsweise dazu eingerichtet, den Betrieb der Kühlvorrichtung in Abhängigkeit der von der sensorischen Prüfvorrichtung erfassten Materialeigenschaft des Extrudates anzupassen.

Nachfolgend werden bevorzugte Ausführungsformen der Erfindung unter Bezugnahme auf die beiliegenden Zeichnungen näher erläutert und beschrieben. Dabei zeigen:
- Fig. 1: eine Kühlvorrichtung zum Ausführen des erfindungsgemäßen Verfahrens in einer schematischen Seitenansicht;
- Fig. 2: den Kühltunnel der in der Fig. 1 abgebildeten Kühlvorrichtung in einer schematischen Seitenansicht; und
- Fig. 3: eine erfindungsgemäße Anlage zum Herstellen eines extrudierten Materialstreifens in einer schematischen Seitenansicht.

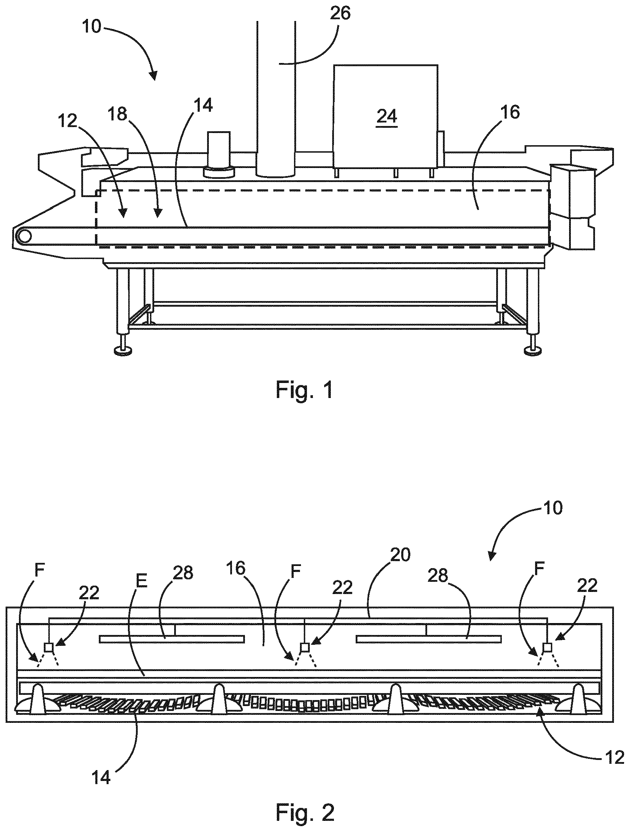

Die Fig. 1 und 2 zeigen eine Kühlvorrichtung 10 zum Abkühlen eines während der Reifenproduktion hergestellten Extrudates E. Das Extrudat ist ein länglicher Materialstreifen aus einem Gummimaterial. Die Kühlvorrichtung 10 umfasst eine Fördereinrichtung 12 zum Fördern des Extrudates E entlang einer Kühlstrecke 18. Die Fördereinrichtung 12 ist als Bandfördereinrichtung ausgebildet, deren Förderband 14 sich entlang der Kühlstrecke 18 erstreckt. Die Kühlstrecke 18 verläuft durch einen Kühltunnel 16 der Kühlvorrichtung 10, innerhalb welchem das Extrudat E mittels eines Kühlfluids F gekühlt wird. Das Kühlfluid F wird über ein Fluidsystem 20 der Kühlvorrichtung 10 bereitgestellt und über Einleitdüsen 22 zum Kühlen des Kühltunnels 16 in den Kühltunnel 16 eingeleitet.

Hierzu weisen die Einleitdüsen 22 Ausströmöffnungen auf, welche auf die Kühlstrecke 18 bzw. das Extrudat E ausgerichtet sind.

Das Kühlfluid F ist oder umfasst ein kryogenes Kühlmedium, nämlich Stickstoff. Innerhalb der Fluidleitungen des Fluidsystems 20 ist der Stickstoff aufgrund eines hohen Fluiddrucks flüssig, wobei das Kühlfluid F aufgrund der Druckdifferenz zwischen dem Fluidsystem 20 und dem Kühltunnel 16 beim Einleiten in den Kühltunnel 16 von einem flüssigen in einen gasförmigen Zustand überführt wird. Innerhalb des Kühltunnels 16 herrscht Umgebungsdruck.

Innerhalb des Kühltunnels 16 der Kühlvorrichtung 10 sind tunnelinterne Strömungserzeuger 28 angeordnet, welche zum Verteilen und Vermischen des Gasgemisches innerhalb des Kühltunnels 16 dienen. Die tunnelinternen Strömungserzeuger 28 sind als Ventilatoren ausgebildet. Über eine Abführeinrichtung 26 kann das Gasgemisch aus dem Kühltunnel 16 abgeführt werden, sodass kein oder lediglich ein geringer Anteil des Gasgemisches in die Umgebung der Kühlvorrichtung 10 gelangt.

Die Kühlvorrichtung 10 weist ferner eine Steuerungseinrichtung 24 auf, über welche verschiedene Prozessparameter während der Extrudatkühlung gesteuert werden können. Über die Steuerungseinrichtung 24 kann beispielsweise die Temperatur innerhalb des Kühltunnels 16 oder die Fördergeschwindigkeit des Extrudates E entlang der tunnelinternen Kühlstrecke 18 gesteuert werden. Die Fördergeschwindigkeit des Extrudates E wird über die Bandgeschwindigkeit des Förderbandes 14 gesteuert. Über die Fördergeschwindigkeit des Extrudates E kann die Verweildauer des Extrudates E innerhalb des Kühltunnels 16 eingestellt werden.

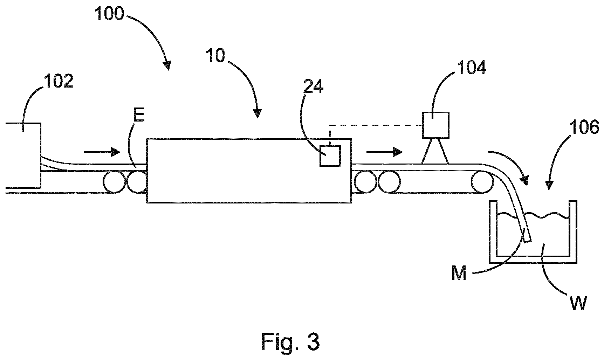

Die Fig. 3 zeigt eine Anlage 100 zum Herstellen eines extrudierten Materialstreifens M für die Produktion eines Reifens, insbesondere eines Fahrzeugluftreifens. Die Anlage 100 umfasst einen Extruder 102, welcher dazu eingerichtet ist, ein Extrudat E für die Reifenproduktion herzustellen. Das Extrudat E wird nach Verlassen des Extruders 102 in den Kühltunnel 16 einer im Nahbereich des Extruders 102 positionierten Kühlvorrichtung 10 gefördert.

Der Extruder 102 und die Kühlvorrichtung 10 können mehrere Meter voneinander beanstandet sein. Zwischen dem Extruder 102 und der Kühlvorrichtung 10 können sich beispielsweise ein oder mehrere Prüf- und/oder Bearbeitungseinrichtungen befinden, beispielsweise ein Profilometer zur Messung und Überprüfung der Oberflächentopografie des Extrudates E. Ferner können zwischen dem Extruder 102 und der Kühlvorrichtung 10 ein oder mehrere Relaxationrollen und/oder eine oder mehrere Farbsprühvorrichtungen angeordnet sein.

Es erfolgt eine direkte Übergabe des Extrudates E von dem Extruder 102 in die Kühlvorrichtung 10, sodass die Übergabezeit weniger als 60 Sekunden beträgt. Aufgrund der Temperaturdifferenz zwischen der Materialtemperatur des Extrudates E und der Temperatur innerhalb des Kühltunnels 16 erfolgt ein Schockfrosten des Extrudates E. Die Schockfrostung des Extrudates E führt dazu, dass es lediglich zu einer äußerst geringen Porositätssteigerung beim Extrudat E kommt.

Die Anlage 100 weist ferner eine sensorische Prüfvorrichtung 104 auf, welche die Porosität des Extrudates E nach der Abkühlung des Extrudates E durch die Kühlvorrichtung 10 erfasst. Die Steuerungseinrichtung 24 der Kühlvorrichtung 10 ist signalleitend mit der Prüfvorrichtung 104 verbunden und passt den Betrieb der Kühlvorrichtung 10 in Abhängigkeit der von der sensorischen Prüfvorrichtung 104 erfassten Porosität des Extrudates E derart an, dass die Porosität minimiert wird oder in einem vorgegebenen Wertebereich liegt.

Ferner weist die Anlage 100 ein Flüssigkeitsbad 106 auf, in welches das Extrudat E nach der Abkühlung durch die Kühlvorrichtung 10 hineingefördert wird. Die Flüssigkeit des Flüssigkeitsbads 106 ist Wasser W. Die Anlage 100 verfügt also über eine zweistufige Extrudatkühlung, wobei die Extrudatkühlung in der ersten Stufe mittels der Kühlvorrichtung 10 und in der zweiten Stufe mittels des Flüssigkeitsbads 106 umgesetzt wird. Das Flüssigkeitsbad 106 ist nicht zwingend erforderlich, wobei die Kombination aus einer Kühlvorrichtung 10 mit einem Kühltunnel 16 und einem Flüssigkeitsbad 106 vorteilhaft sein kann.

### Bezugszeichenliste

- 10: Kühlvorrichtung
- 12: Fördereinrichtung
- 14: Förderband
- 16: Kühltunnel
- 18: Kühlstrecke
- 20: Fluidsystem
- 22: Einleitdüsen
- 24: Steuerungseinrichtung
- 26: Abführeinrichtung
- 28: Strömungserzeuger

- 100: Anlage
- 102: Extruder
- 104: Prüfvorrichtung
- 106: Flüssigkeitsbad

- E: Extrudat
- F: Kühlfluid
- M: Materialstreifen
- W: Wasser

## Patentansprüche

1. Verfahren zum Abkühlen eines während der Reifenproduktion hergestellten Extrudates (E), **gekennzeichnet durch** die Schritte:
- Fördern des Extrudates (E) mittels einer Fördereinrichtung (12) einer Kühlvorrichtung (10) durch einen Kühltunnel (16) der Kühlvorrichtung (10) entlang einer tunnelinternen Kühlstrecke (18); und
- Kühlen des Kühltunnels (16) mittels eines über ein Fluidsystem (20) der Kühlvorrichtung (10) bereitgestellten Kühlfluids (F).

2. Verfahren nach Anspruch 1,
**dadurch gekennzeichnet, dass** das Kühlfluid (F) zum Kühlen des Kühltunnels (16) in den Kühltunnel (16) eingeleitet wird.

3. Verfahren nach Anspruch 2,
**dadurch gekennzeichnet, dass** das Kühlfluid (F) aufgrund der Druckdifferenz zwischen dem Fluidsystem (20) und dem Kühltunnel (16) beim Einleiten in den Kühltunnel (16) vom einem flüssigen in einen gasförmigen Zustand überführt wird.

4. Verfahren nach einem der vorstehenden Ansprüche,
**dadurch gekennzeichnet, dass** das Extrudat (E)
- über eine Einlauföffnung in den Kühltunnel (16) hineingefördert wird, wobei die Einlauföffnung vorzugsweise mittels eines Schließkörpers verschließbar ist und die Einlauföffnung beim Hineinfördern des Extrudates (E) geöffnet ist; und/oder
- über eine Auslauföffnung aus dem Kühltunnel (16) herausgefördert wird, wobei die Auslauföffnung vorzugsweise mittels eines Schließkörpers verschließbar ist und die Auslauföffnung beim Herausfördern des Extrudates (E) geöffnet ist.

5. Verfahren nach einem der vorstehenden Ansprüche,
**dadurch gekennzeichnet, dass** eine Steuerungseinrichtung (24) der Kühlvorrichtung (10) einen, mehrere oder sämtliche der folgenden Prozessparameter steuert:
- die Temperatur innerhalb des Kühltunnels (16);
- die Fluiddruck innerhalb des Fluidsystem (20);
- die Einleitmenge und/oder die Einleitrate des in den Kühltunnel (16) eingeleiteten Kühlfluids (F);
- die Verweildauer des Extrudates (E) innerhalb des Kühltunnels (16);
- die Fördergeschwindigkeit des Extrudates (E) entlang der tunnelinternen Kühlstrecke (18);
- die Zusammensetzung des Kühlfluids (F).

6. Verfahren nach einem der vorstehenden Ansprüche,
**dadurch gekennzeichnet, dass** das Extrudat (E) nach der Abkühlung durch die Kühlvorrichtung (10) in ein Flüssigkeitsbad (106) gegeben wird.

7. Verfahren nach einem der vorstehenden Ansprüche,
**gekennzeichnet durch** den Schritt:
- Erfassen zumindest einer Materialeigenschaft des Extrudates (E) nach der Abkühlung des Extrudates (E) durch die Kühlvorrichtung (10) mittels einer sensorischen Prüfvorrichtung (104);
wobei die Steuerungseinrichtung (24) der Kühlvorrichtung (10) vorzugsweise den Betrieb der Kühlvorrichtung (10) in Abhängigkeit der von der sensorischen Prüfvorrichtung (104) erfassten Materialeigenschaft des Extrudates (E) anpasst.

8. Anlage (100) zum Herstellen eines extrudierten Materialstreifens (M) für die Produktion eines Reifens, mit
- einem Extruder (102), welcher dazu eingerichtet ist, ein Extrudat (E) für die Reifenproduktion herzustellen;
**gekennzeichnet durch** eine Kühlvorrichtung (10) zum Abkühlen des mittels des Extruder (102) hergestellten Extrudates (E), wobei die Kühlvorrichtung (10) einen Kühltunnel (16) mit einer tunnelinternen Kühlstrecke (18), eine Fördereinrichtung (12) zum Fördern des Extrudates (E) entlang der Kühlstrecke (18) durch den Kühltunnel (16) und ein Fluidsystem (20), welches dazu eingerichtet ist, ein in den Kühltunnel (16) einzuleitendes Kühlfluid (F) zu führen, umfasst.

9. Anlage (100) nach Anspruch 8,
**dadurch gekennzeichnet, dass** die Kühlvorrichtung (10) dazu eingerichtet ist, das Extrudat (E) gemäß einem Verfahren nach einem der Ansprüche 1 bis 7 abzukühlen.

10. Anlage (100) nach Anspruch 8 oder 9,
**gekennzeichnet durch**
- ein Flüssigkeitsbad (106), in welches das Extrudat (E) nach der Abkühlung durch die Kühlvorrichtung (10) förderbar ist;
- eine Steuerungseinrichtung (24), welche dazu eingerichtet ist, einen oder mehrere Prozessparameter der Kühlvorrichtung (10) zu steuern; und/oder
- eine sensorische Prüfvorrichtung (104), welche dazu eingerichtet ist, zumindest eine Materialeigenschaft des Extrudates (E) nach der Abkühlung des Extrudates (E) durch die Kühlvorrichtung (10) zu erfassen.
